# EUROPEAN PATENT SPECIFICATION

(11) **EP 4 349 632 B1**
(45) Date of publication and mention of the grant of the patent: **14.05.2025**
(21) Application number: 23198854.4
(22) Date of filing: 21.09.2023
(51) Int. Cl.: B60K 35/21, B60K 35/22

(54) **DISPLAY SYSTEM FOR VEHICLE, SADDLE-RIDING VEHICLE, AND DISPLAY METHOD FOR VEHICLE**
ANZEIGESYSTEM FÜR EIN FAHRZEUG, SATTELFAHRZEUG UND ANZEIGEVERFAHREN FÜR EIN FAHRZEUG
SYSTÈME D'AFFICHAGE POUR VÉHICULE, VÉHICULE À SELLE ET PROCÉDÉ D'AFFICHAGE POUR VÉHICULE

(30) Priority: 04.10.2022 JP 2022160499
(43) Date of publication of application: 10.04.2024
(73) Proprietor: Kawasaki Motors, Ltd., Akashi-shi, Hyogo 673-8666 (JP)
(72) Inventor: SEO, Jiwon, Akashi-shi, 673-8666 (JP)
(74) Representative: Kilian Kilian & Partner mbB

(56) References cited:
- DE-A1- 102010 010 443
- DE-A1- 102012 000 584
- US-A1- 2021 155 112

## Description

### BACKGROUND OF THE INVENTION

### Field of the Invention

The present invention relates to a display system for a vehicle which can perform boost traveling, a saddle-riding vehicle, and a display method for the vehicle.

### Description of the Background Art

Japanese Unexamined Patent Application Publication (Translation of PCT Application) No. 2013-520351 discloses a technique of numerically displaying a remaining boost time available on a display device of an automobile. Further prior art documents are DE 10 2012 000584 A1, US 2021/155112 A1 and DE 10 2010 010443 A1.

### SUMMARY

An object is to clearly display a limitation condition on boost traveling for an operator. This object is solved by the subject-matters of the independent claims. Further advantageous modifications and embodiments of the invention are subject-matters of the dependent claims.

A display system for a vehicle is a display system for a vehicle which can perform boost traveling according to claim 1, and includes amongst others a display displaying a boost information image including a boost limitation condition information image indicating boost limitation condition information and a circuitry controlling display of the display to change a display area of the boost limitation condition information image in accordance with a limitation condition in the boost traveling.

A display method for a vehicle is a display method for a vehicle which can perform boost traveling according to claim 14, and includes amongst others: displaying a boost information image including a boost limitation condition information image indicating boost limitation condition information and changing a display area of the boost limitation condition information image in accordance with a limitation condition in the boost traveling.

According to the display system and the display method, a limitation condition on boost traveling can be clearly displayed for an operator.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic side view illustrating a whole configuration of an automatic two-wheel vehicle according to an embodiment.
Fig. 2 is a block diagram illustrating an electrical configuration of the automatic two-wheel vehicle.
Fig. 3 is a diagram illustrating a display image example in a display device.
Fig. 4 is a diagram illustrating a display example of the display device in a boost mode state.
Fig. 5 is a diagram illustrating another display example of the display device in the boost mode state.
Fig. 6 is a diagram illustrating a display example of the display device in a state where a boost remaining amount is 0.
Fig. 7 is a diagram illustrating a display example of the display device in a boost standby state.
Fig. 8 is a diagram illustrating a display example of the display device in a boost standby state.
Fig. 9 is a diagram illustrating a display example of the display device in an output limitation boost state.
Fig. 10 is a flow chart illustrating a display processing example by a control device.
Fig. 11 is a diagram illustrating a display example of a display device according to a modification example.

### DESCRIPTION OF THE PREFERRED EMBODIMENTS

### <Whole configuration>

Described are a display system for a vehicle, a saddle-riding vehicle, and a display method for the vehicle according to an embodiment. The vehicle is an object which carries a person and moves. Assumed in the present embodiment is that the vehicle includes a power engine generating power for the movement. Also assumed is that a maximum value of energy for the movement generated by the power engine can be temporarily increased.

An example of the vehicle is a saddle-riding vehicle. The saddle-riding vehicle is a vehicle in which a driver straddles a sheet in a drive state or a stopping state. An example that the saddle-riding vehicle is an automatic two-wheel vehicle is described in the present embodiment. The automatic two-wheel vehicle may be a motor scooter. It is not necessary that the saddle-riding vehicle is the automatic two-wheel vehicle. The saddle-riding vehicle may be an all terrain vehicle (ATV) or a personal watercraft, for example. It is not necessary that the vehicle is the saddle-riding vehicle. For example, the vehicle may be a four-wheel automobile driven by a driver sitting on a driver seat.

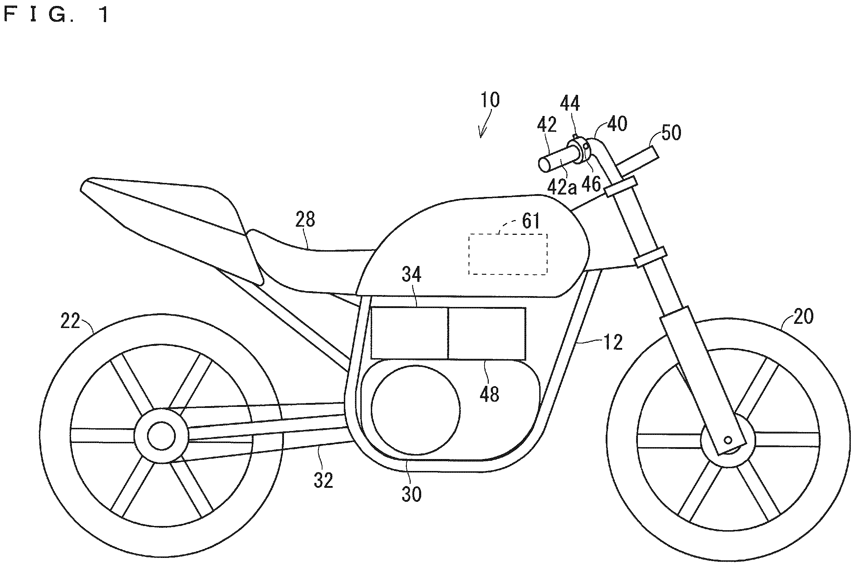

Fig. 1 is a schematic side view illustrating a whole configuration of an automatic two-wheel vehicle 10. When upper and lower sides, front and back sides, and right and left sides are referred in the description hereinafter, each direction is defined as follows. A side on which a front wheel 20 and a rear wheel 22 of the automatic two-wheel vehicle 10 are connected to a road surface is a lower side, and a side opposite thereto is an upper side. A travel direction in which the automatic two-wheel vehicle 10 travels is a front side, and a side opposite thereto is a back side. Right and left based on a driver riding on the automatic two-wheel vehicle 10 and facing forward are right and left sides of the automatic two-wheel vehicle 10.

The automatic two-wheel vehicle 10 includes a vehicle body frame 12, the front wheel 20, the rear wheel 22, and a travel power source 30. The front wheel 20 is rotatably supported on a front side of the vehicle body frame 12. The rear wheel 22 is rotatably supported on a back side of the vehicle body frame 12. The vehicle body frame 12 is provided with the travel power source 30. A handle device 40 is provided on the front side of the vehicle body frame 12. An orientation of the front wheel 20 is changed by a driver operating the handle device 40. The orientation of the front wheel 20 is changed, thus a travel direction of the automatic two-wheel vehicle 10 is changed. A sheet 28 on which the driver sits is provided on an upper side of the vehicle body frame 12 between the front wheel 20 and the rear wheel 22.

The travel power source 30 generates power for the automatic two-wheel vehicle 10 to travel. The travel power source 30 includes an electrical motor for traveling, for example. The travel power source 30 may include an internal combustion engine for traveling in addition to or in place of the electrical motor for traveling. The description hereinafter is based on an assumption that the travel power source 30 is mainly an electrical motor for traveling. The power of the travel power source 30 is transmitted to the rear wheel 22 via a power transmission mechanism 32, thereby rotationally driving the rear wheel 22. The power transmission mechanism 32 is a rotation transmission mechanism including a chain, for example. The power transmission mechanism 32 may include a shift transmission mechanism changing a rotational speed of the travel power source 30 by a combination of a plurality of gears to transmit the power to the rear wheel 22, for example. The travel power source may be incorporated into the rear wheel or the front wheel. **In** this case, the power of the travel power source may be directly transmitted to the rear wheel or the front wheel.

The handle device 40 includes a pair of handle grips 42 on right and left sides. A display device 50 is disposed around the handle device 40. For example, the display device 50 is disposed in a position where the driver sitting on the sheet 28 and gripping the pair of handle grips 42 can visually see the display device 50. The display device 50 is located in a position closer to the front side than the handle device 40. The display device 50 may be supported by the handle device 40 and rotated in accordance with a steering of the handle device 40. The display device 50 may be supported in a constant position in the vehicle body frame 12 via a bracket, for example, so as not to be rotated even when the handle device 40 is operated. The driver is an operator of the automatic two-wheel vehicle 10, and is also an operator of the display device 50.

The display device 50 is a device displaying an information image indicating vehicle information. The display device 50 is a liquid crystal display device or an organic electro-luminescence (EL) display device, for example. Assumed as the vehicle information is travel information of the automatic two-wheel vehicle 10 and state information of the automatic two-wheel vehicle 10 itself, for example. The information image is an image indicating information by a picture, a graphic, or character, for example. A display example of the display device 50 is described hereinafter.

One of the pair of handle grips 42 on the right and left sides in the handle device 40 is a throttle 42a. A rotational speed of the travel power source 30 is controlled in accordance with a throttle operation.

The automatic two-wheel vehicle 10 includes a boost switch 44. The boost switch 44 is a switch switching a travel state of the automatic two-wheel vehicle 10 between a normal travel mode and a boost mode.

The automatic two-wheel vehicle 10 includes a start switch 46. The start switch 46 is a switch switching a state of the automatic two-wheel vehicle 10 between a travelable state and a stopping state. When the start switch 46 is turned on, the state is switched to the travelable state in which the travel power source 30 can be driven. When the start switch 46 is turned off, power supply to the travel power source 30 is cut off and the state is switched to the stopping state.

The boost switch 44 and the start switch 46 are preferably a man-machine interface receiving the operation of the driver, and may also be a push switch, a slide switch, or a touch panel, for example. Arrangement positions of the boost switch 44 and the start switch 46 are not particularly limited. The boost switch 44 and the start switch 46 may be provided to the handle device 40 or the display device 50.

The automatic two-wheel vehicle 10 may include a brake. For example, a brake lever may be attached to at least one of the pair of handle grips 42 on the right and left sides. The rotational speed of the travel power source 30 may be controlled in accordance with operations of the throttle 42a and the brake lever.

The power transmission mechanism 32 may include a shift transmission mechanism including a plurality of gears. In this case, the speed control of the automatic two-wheel vehicle 10 may be performed by control on the travel power source 30 and the shift transmission mechanism of the power transmission mechanism 32.

The automatic two-wheel vehicle 10 may include a battery 48. Power from the battery 48 is supplied to the travel power source 30 via a travel drive circuit 34. The travel drive circuit 34 is an inverter circuit, for example.

The automatic two-wheel vehicle 10 includes a control device 61. The control device 61 is an electrical control device controlling each unit in the automatic two-wheel vehicle 10. The control device 61 includes a travel control processing function including a processing function of controlling the travel power source 30 via the travel drive circuit 34. **In** the present embodiment, the automatic two-wheel vehicle 10 can perform normal traveling and boost traveling. The normal travel mode and the boost mode are switched via the boost switch 44. The control device 61 executes travel control processing corresponding to the normal travel mode when the normal travel mode is set, and executes travel control processing corresponding to the boost mode when the boost mode is set.

Herein, the boost traveling indicates a state of traveling with larger energy than maximum energy for the normal traveling, and the boost mode indicates a state in which the boost traveling can be performed. It is assumed that the boost traveling cannot be performed even when the throttle 42a is operated in the normal travel mode, however, the boost traveling can be performed in accordance with the throttle 42a in the boost mode.

That is to say, the automatic two-wheel vehicle 10 can set the normal travel mode and the boost mode. Maximum energy for traveling in the boost mode is set to be larger than maximum energy for traveling in the normal travel mode. For example, the maximum energy in the normal travel mode is set to have a value so that the automatic two-wheel vehicle 10 can be operated for a long period of time in consideration of a thermal load and a mechanical load of a part operated for traveling. For example, the maximum energy in the boost mode is set to have a value so that the automatic two-wheel vehicle 10 can be temporarily operated in consideration of a thermal load and a mechanical load of a part operated for traveling. The part operated for traveling is the travel power source 30, the power transmission mechanism 32, the travel drive circuit 34, and the battery 47, for example, provided for traveling in the vehicle, and is simply referred to as a travel part in some cases hereinafter.

When the travel power source is an electrical motor, allowable instantaneous current is set. **In** the boost mode, instantaneous current temporarily supplied is set to be large by limiting a supply period compared with the normal travel mode. **In** the boost mode, a current amount as an accumulated value of current in a predetermined period may be set to be large in place of the instantaneous current compared with the normal travel mode.

Such a boost traveling may indicate a state where output characteristics are changed so that an acceleration performance is increased compared with the normal traveling. The output may be larger in the boost traveling than in the normal traveling even when the throttle operation amount is the same. An output change may be larger in the boost traveling than in the normal traveling even when a time change in which the throttle operation amount is increased is the same. The maximum energy in the boost mode may be energy per unit time in the boost mode or an accumulated value of energy stored in a period of the boost mode.

For example, the boost traveling is used at a time of starting moving or overtaking a vehicle traveling side by side. **In** this manner, the boost traveling may indicate a travel mode selected when the driver desires a temporal acceleration. As described above, the boost traveling is a temporal, in other words, non-long-term travel mode, thus a boost limitation condition of limiting continuous traveling is set. The driver visually confirms the boost limitation condition displayed in the display device, thereby being able to grasp whether or not the boost traveling can be performed or a time in which the boost traveling can be performed, for example. The boost limitation condition is changed in accordance with a vehicle state in traveling.

The operation is performed on the throttle 42a while the mode is set to the boost mode, thus the automatic two-wheel vehicle 10 performs the boost traveling. The time in which the boost traveling can be performed is assumed to be limited to a preset limitation time in consideration of a significance of the maximum energy in the boost mode described above.

The maximum energy in the normal travel mode and the boost mode is limited by an element having a correlationship with the energy in traveling, and is limited by an output, the number of rotations, a torque, or a current amount of the travel power source 30, or a temperature of a power source or battery, for example.

The control device 61 described above includes a processing function as a display control part controlling display on the display device 50.

### <Block diagram>

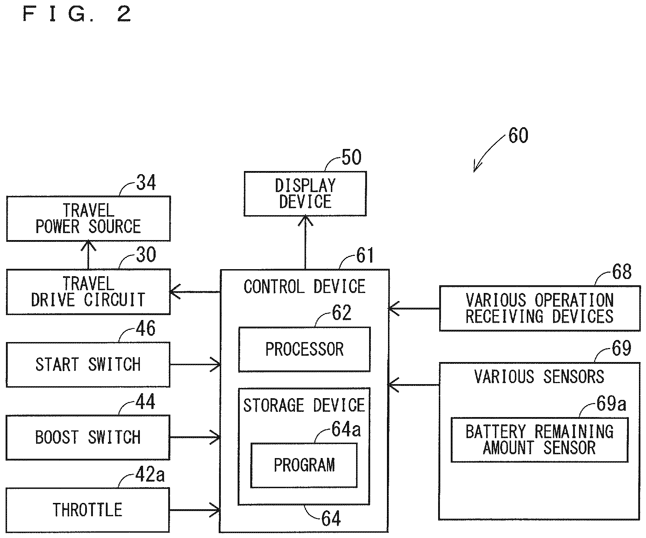

Fig. 2 is a block diagram illustrating an electrical configuration of the automatic two-wheel vehicle 10. The automatic two-wheel vehicle 10 includes a display system 60 including the control device 61 and the display device 50.

The control device 61 is a microcomputer including a processor 62 and a storage device 64, for example. The control device 61 is an example of a processing circuit. The processor 62 is an electrical circuit including an arithmetic circuit, and is a central processing unit (CPU), for example. The processor 62 may include one or more processor cores. The processing in the control device 61 may be achieved by one or more processors 62 included in the control device 61, or may also be achieved by cooperation processing of a plurality of control devices. The storage device 64 is a non-volatile memory such as a flash memory. The storage device 64 stores a software program 64a. The processor 62 executes an arithmetic operation in accordance with a processing procedure described in the program 64a, thus processing of controlling the display on the display device 50 is executed as described hereinafter.

The control device 61 is connected to the display device 50, the travel drive circuit 34, the throttle 42a, the start switch 46, and the boost switch 44.

The display device 50 performs display corresponding to the display control by the control device 61. The travel drive circuit 34 supplies the power to the travel power source 30 in accordance with control by the control device 61. For example, the travel drive circuit 34 controls a torque, the number of rotations and a rotational direction of the travel power source 30 in accordance with instruction by the control device 61. **In** the present embodiment, the travel drive circuit 34 supplies the power to the travel power source 30 within a range of the maximum energy corresponding to the normal travel mode in the normal travel mode, and supplies the power to the travel power source 30 within a range of the maximum energy corresponding to the boost mode in the boost mode.

When the driver operates the throttle 42a, the start switch 46, or the boost switch 44, the throttle 42a, the start switch 46, or the boost switch 44 receives the operation. The received instruction is inputted to the control device 61 from the throttle 42a, the start switch 46, or the boost switch 44.

The control device 61 is connected to the other various operation receiving devices 68 and various sensors 69.

The various operation receiving devices 68 are a man-machine interface receiving the operation of the driver, and are a push switch, a slide switch, or a touch panel, for example. Arrangement positions of the various operation receiving devices 68 are not particularly limited. Various instructions on the automatic two-wheel vehicle 10 are received through the various operation receiving devices 68, and inputted to the control device 61.

The various sensors 69 include a sensor obtaining information for driving the travel power source. The various sensors 69 include a sensor for determining the boost limitation condition. The various sensors 69 may be an acceleration sensor, a sensor for measuring a remaining amount of the battery 48, a temperature sensor of the battery 48, or a sensor measuring current of a battery or an electrical motor, for example. A detection result of the various sensors 69 is inputted to the control device 61.

The control device 61 can perform the travel control of the automatic two-wheel vehicle 10 and the display control of the display device 50 based on the input from the various operation receiving devices 68 and the various sensors 69, for example.

The control device 61 may be communicably connected to a mobile terminal device such as a smartphone via a communication circuit.

### <Display example of display device>

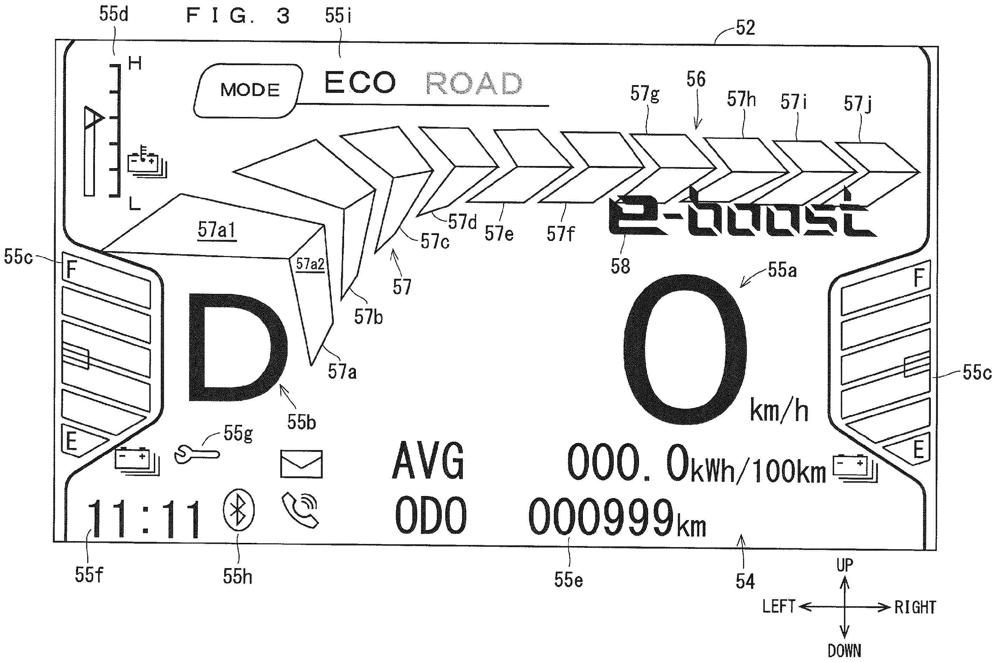

Fig. 3 is a diagram illustrating a display image example in the display device 50. Fig. 3 is a diagram for explaining an example of a shape and a layout of the display image and does not necessarily illustrate an actual display example in the display device 50.

The display device 50 includes a display screen 52. A boost information image 56 is displayed on the display screen 52. A vehicle information image 54 displayed with no relation to the boost state is also displayed in the display device 50.

The vehicle information image 54 is an image indicating vehicle state information indicating a vehicle state of the automatic two-wheel vehicle 10. **In** the present embodiment, the vehicle information image 54 includes a speed information image 55a, a gear information image 55b, a battery remaining amount image 55c, a battery temperature image 55d, an auxiliary travel information image 55e, a time image 55f, a setting image 55g, a connection information image 55h, and a travel mode image 55i.

The speed information image 55a is an image indicating a travel speed of the automatic two-wheel vehicle 10. The gear information image 55b is an image indicating a state of the gear of the automatic two-wheel vehicle 10. For example, a display of "D" of the speed information image 55a indicates a drive state. When the power transmission mechanism 32 includes a multiple-stage transmission mechanism, it is also assumed that the speed information image 55a displays the number of shift transmission stages. The battery remaining amount image 55c is an image indicating a remaining amount of the battery 48. The plurality of battery remaining amount images 55c can indicate a remaining amount of each battery 48 in a case where the plurality of batteries 48 are provided. The battery temperature image 55d is an image indicating a temperature of the battery 48. The auxiliary travel information image 55e is an image indicating an average electricity cost, an average electricity cost, and an accumulated travel distance, for example. The time image 55f is an image indicating a current time, a setting image 55g is an image indicating that a setting is being performed by a switch which is separately provided, and a connection information image 55h is an image indicating connection information of a mobile terminal device such as a smartphone connected to the automatic two-wheel vehicle 10.

The travel mode image 55i is an image indicating whether the mode is a power saving travel mode limiting output of the travel power source 30 to be appropriate for power saving or a sport mode canceling the output limitation for power saving. The boost mode may be set in only the sport mode, or may set in both the power saving travel mode and the sport mode.

The speed information image 55a is large and noticeably located in a region close to a right side in an intermediate region in the up-down direction. The gear information image 55b is located on a left side of the speed information image 55a. The speed information image 55a and the gear information image 55b are located away from each other on right and left sides. Two battery remaining amount images 55c are located on left and right sides of the speed information image 55a and the gear information image 55b.

The travel mode image 55i is located on an upper side of the speed information image 55a and the gear information image 55b. The travel mode image 55i is located away from the speed information image 55a and the gear information image 55b in the up-down direction. The battery temperature image 55d is located on a left side of the travel mode image 55i and an upper side of the battery remaining amount image 55c on a right side.

The auxiliary travel information image 55e is located on a lower side of the speed information image 55a, and the time image 55f, the setting image 55g, and the connection information image 55h are located on a lower side of the battery remaining amount image 55c and the gear information image 55b on the left side.

The boost information image 56 includes a boost limitation condition information image 57. The boost limitation condition information image 57 passes between the speed information image 55a and the travel mode image 55i and extends from a position surrounding the gear information image 55b from right and upper sides to a right side to reach an upper side of the battery remaining amount image 55c on the right side.

In the present embodiment, the boost information image 56 includes a boost permission display image 58. The boost permission display image 58 is an image indicating that the mode can be set to the boost mode. In the present embodiment, the boost permission display image 58 is character information of "e-boost". The boost permission display image 58 is not limited to the character information, but may be a pictogram code, a pattern, or a diagram indicating that the mode can be set to the boost mode. The boost permission display image 58 is located between the speed information image 55a and the boost limitation condition information image 57. An upper part of the boost permission display image 58 is overlapped with a lower part of the boost limitation condition information image 57. A part of the boost permission display image 58 is overlapped with a part of the boost limitation condition information image 57, thus information provided by the boost permission display image 58 and the boost limitation condition information image 57 is visually recognized with a small movement of vision. A remaining part of the boost permission display image 58 is not overlapped with the boost limitation condition information image 57, and a remaining part of the boost limitation condition information image 57 is not overlapped with the boost permission display image 58. Thus, information indicated by each of the boost permission display image 58 and the boost limitation condition information image 57 is easily grasped.

The boost limitation condition information image 57 is an image indicating boost limitation condition information. The boost limitation condition is a condition to be limited in the boost traveling. As described above, the boost traveling is a travel mode temporarily allowed, thus a limitation may be applied to suppress an unexpected large load applied to the travel part. The boost limitation condition is a limitation to be a condition in the boost traveling. The boost limitation condition may be a condition which can suppress an unexpected load to the travel part, or may also be a limitation condition other than load suppression.

Assumed as the boost limitation condition are a boost remaining amount indicating a degree of the boost traveling which can be performed and a boostable output amount indicating a type of output by which the boost traveling can be performed, for example. The boost remaining amount relates to a remaining time for which the boost traveling can be continued in the boost traveling. The boost remaining amount relates to a remaining time for which the boost traveling can be continued in a case of being switched to the boost traveling in the normal traveling. A condition indicating whether or not the boost can be performed may be included as a boost limitation condition.

The boost remaining amount is assumed to be expressed by an area increasing or decreasing as the boost traveling is continued, for example. An example of the boost remaining amount is described.

For example, when a boost traveling time increases, a load on the travel part increases. Thus, the boost remaining amount as an example of the boost limitation condition may be a time for which the boost traveling can be performed. More specifically, the boost limitation condition may be a time equal to or shorter than n seconds. An upper limit value of n can be theoretically, experimentally, and empirically set in consideration of the load on the travel part. n gradually decreases in accordance with the continuous boost traveling.

For example, when a consumed power amount or a consumed current amount by the boost traveling increases, a load on the travel part increases, for example. Thus, the boost remaining amount as an example of the boost limitation condition may be a power amount or a current amount which can be consumed by the boost traveling. A maximum value of the power amount or the current amount which can be consumed by the boost traveling can be theoretically, experimentally, and empirically set in consideration of the load on the travel part. The power amount or the current amount by the boost traveling is integrated based on an output from a sensor in the boost traveling. For example, applicable as the power amount or the current amount which can be consumed in the boost traveling is a value subtracting an integrated value of the power amount or the current amount from the maximum value of the power amount or the current amount.

For example, when the boost traveling is continued, a temperature of the travel power source 30, the travel drive circuit 34, or the battery 48 increases, and a load increases. Thus, the boost remaining amount as the boost limitation condition may be a difference in temperature which can be increased by the boost traveling. A maximum value of the temperature which can be increased by the boost traveling is theoretically, experimentally, and empirically set in consideration of the load on the travel part. A detection value of the temperature of the travel power source 30, the travel drive circuit 34, or the battery 48 is obtained based on a sensor output in the boost traveling. For example, the difference in temperature which can be increased in the boost traveling may be a value obtained by subtracting the detection value of the temperature from a maximum value of the temperature.

The boost remaining amount as the boost limitation condition may be a remaining amount calculated by plural combination of the time, the consumed power amount, consumed current amount, and the temperature described above.

The description hereinafter is based on an assumption that the boost remaining amount is a time for which the boost traveling can be performed.

The boostable output amount is the limitation as the condition in the boost traveling as described above. For example, it is considered that the boost traveling is allowed from a viewpoint of the load on the travel part, however, boost in which an output is limited is preferable to normal boost from the other viewpoint. Assumed as the other viewpoint is a case where the remaining amount of the battery 48 is equal to or smaller than a preset value, for example. Thus, it is considered that the boost traveling with a maximum output ma is allowed in the normal boost traveling, however, when the remaining amount of the battery 48 falls under a predetermined limitation state, an output limitation boost traveling with a maximum output mb smaller than ma is allowed.

That is to say, the boostable output amount indicates a boostable amount in each point of time expressed by an output value, for example, and the boost remaining amount indicates a degree of remaining boost which can be performed from each point of time expressed by a time, a consumed amount, or an amount of increasable temperature, for example.

**In** the present embodiment, the boost remaining amount and the boostable output amount are assumed as the boost limitation condition. The control device 61 controls the display of the display device 50 to change a display area of the boost limitation condition information image 57 in accordance with the limitation condition in the boost traveling.

**In** the present embodiment, the control device 61 controls the display of the display device 50 so that the display area of the boost limitation condition information image 57 is increased as the boost limitation condition is eased. A state where the limitation condition is eased indicates that a limitation on the boost traveling is eased, that is, for example, a limitation of a time, an output, a temperature, or a consumed amount limiting the boost is eased. Thus, increase in the boost remaining amount indicates that the limitation condition is eased. Increase in the boostable output amount indicates that the limitation condition is eased. **In** other words, the state where the boost limitation condition is eased indicates a state where a remaining amount of energy which can be continuously output in the boost traveling is large.

Described is an example that the display area of the boost limitation condition information image 57 is large as the boost remaining amount is large.

The boost limitation condition information image 57 includes a plurality of segmented regions 57a, 57b, 57c, 57d, 57e, 57f, 57g, 57h, 57i, and 57j (simply referred to as the segmented region 57a etc. collectively in some cases hereinafter). The plurality of segmented regions 57a etc. are arranged in a row from a position on an upper side of the gear information image 55b toward a position on an upper side of the battery remaining amount image 55c on the right side. The display region of the boost limitation condition information image 57 is divided into the segmented regions 57a etc. described above, and a blank space sectioning the segmented regions 57a etc. adjacent to each other is displayed. Accordingly, a visual recognition effect can be further increased. The plurality of segmented regions 57a, 57b, and 57b close to one end are arranged to be directed upward from the gear information image 55b toward the right side. The remaining plurality of segmented regions 57d, 57e, 57f, 57g, 57h, 57i, and 57j are arranged along the right-left direction also in a position above the speed information image 55a. Thus, the plurality of segmented regions 57a etc. surround a part of the speed information image 55a. Herein, the plurality of segmented regions 57a etc. surround a part of the speed information image 55a close to an upper side and an upper left side.

The segmented region 57a located in any one of ends (herein, a leftmost end) of the plurality of segmented regions 57a is an initial segmented display region 57a displayed firstly when the boost can be performed. The initial segmented display region 57a is a region finally entering a non-display state from a display state in the boost traveling.

The initial segmented display region 57a described above has a largest display area in the plurality of segmented regions 57a etc. An area of each of the plurality of segmented regions 57a 57b, 57c, and 57c close to the initial segmented display region 57a in the segmented regions 57a increases toward a left end. Accordingly, the display area of the segmented regions 57a, 57b, 57c, and 57d indicating the boost remaining amount can be increased in an initial state where the boost can be performed or a late state where the boost amount decreases, and the boost remaining amount can be easily recognized. Particularly, the display area of the initial segmented display region 57a is largest, thus it is easily recognized that the boost can be performed even in a state where there is a small boost remaining amount.

Herein, an area of each of the remaining plurality of segmented regions 57e, 57f, 57g, 57h, 57i, and 57j is not changed in the segmented regions 57a etc. however, this configuration is not necessary.

The initial segmented display region 57a is a region bended into an L-like shape. Herein, the region bended into the L-like shape includes not only a case where a straight first region and a straight second region are perpendicular to each other but also a case where the first region and the second region are curved, a case where the first region and the second region intersect with each other at an angle other than 90 degrees, and a case where the first region and the second region are curved and intersect with each other. That is to say, the region bended into the L-like shape includes a case where an elongated region having directionality intersects without being continuously formed straight.

More specifically, the initial segmented display region 57a is located adjacent to the gear information image 55b. Furthermore specifically, included are a first region 57a1 extending in a horizontal direction on an upper side of the gear information image 55b and a second region 57a2 extending in an up-down direction on a right side of the gear information image 55b. The second region 57a2 extends downward from a right end of the first region 57a1. Accordingly, the initial segmented display region 57a surrounds a part of the gear information image 55b on a right side and close to an upper right side.

The plurality of segmented regions 57e, 57f, 57g, 57h, 57i, and 57j are formed into shapes in which two parallelograms face each other. The plurality of segmented regions 57b, 57c, and 57d have shapes in which two quadrangular regions are combined with each other, and are formed into a shape sequentially close to the shape of the segmented region 57e from the shape of the initial segmented display region 57a.

The plurality of segmented regions 57b, 57c, 57d, 57e, 57f, 57g, 57h, 57i, and 57j (simply referred to as the subsequent segmented region 57b etc. collectively in some cases hereinafter) also include the first region and the second region. The first region of the subsequent segmented region 57b etc. is located on an upper side of the second region of the subsequent segmented region 57b etc. The first region of the subsequent segmented region 57b etc. is arranged in a row together with the first region 57a1 described above. The second region of the subsequent segmented region 57b etc. is arranged in a row together with the second region 57a2 described above.

The control device 61 increases the number of displays of the plurality of segmented regions 57a etc. as the boost remaining amount is large. **In** other words, the display area is increased as the boost remaining amount is large. Herein, the display indicates that the image can be visually recognized in a state before the display. Thus, change of a color phase, color saturation, or brightness of a plain region is an example of the display. For example, change of a white-ground region to a gray region, a black-ground region, or a chromatic color region is an example of the display. For example, change of a black-ground region to a gray region, a white-ground region, or a chromatic color region is an example of the display. A region color before the display is preferably the same as a background color or a color closer to a background color than a region color after the display.

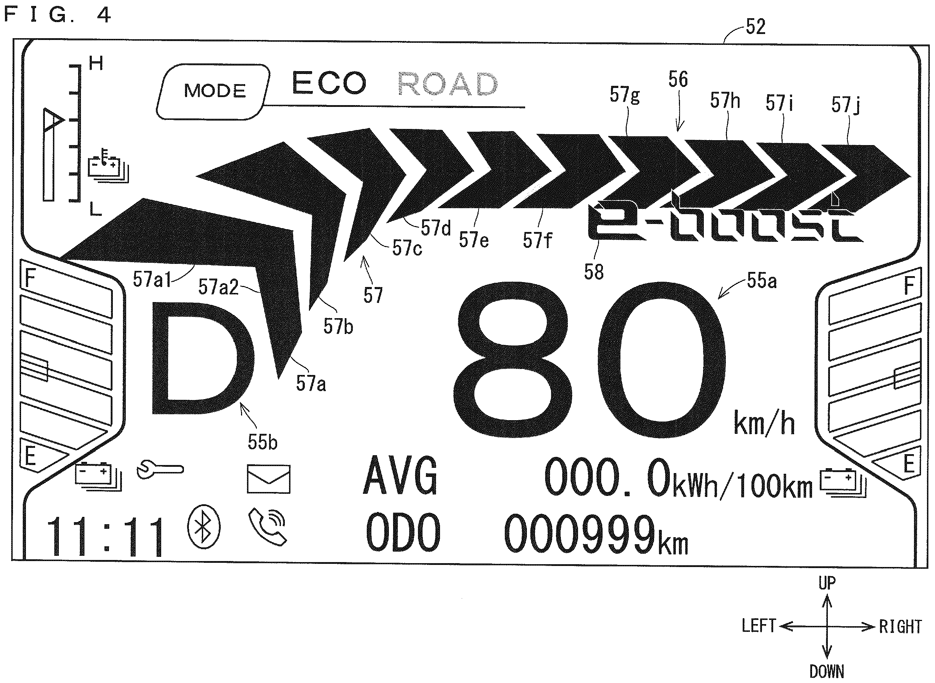

Fig. 4 is a diagram illustrating a display example of the display device 50 in the boost mode state. Fig. 4 illustrates a state where the boost remaining amount has an upper limit value in the boost mode. For example, a boostable time is assumed to be a maximum time. **In** this case, the display area of the boost limitation condition information image 57 is maximum, that is to say, all of the segmented regions 57a etc. are in the display state.

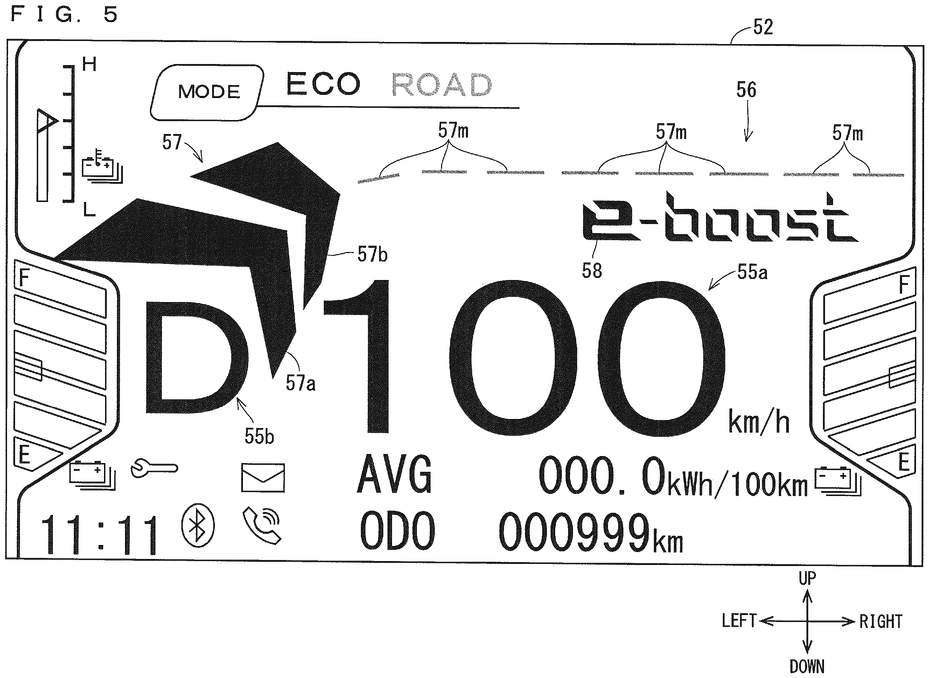

When the boost traveling is started in the boost mode, the boost remaining amount decreases. For example, a boostable time is assumed to decrease. A speed of decrease in the boost remaining amount may be changed in accordance with a consumption amount of energy in the boost traveling. For example, it is also applicable to set the boost remaining amount to decrease fast when the throttle operation is large by reason that the consumption amount of the energy is large. As illustrated in Fig. 5, the number of displays of the segmented region 57a etc. decreases in accordance with decrease in the boost remaining amount. **In** the present embodiment, the segmented regions 57a etc. sequentially enter a non-display state from right. The driver visually recognizes the number of displays of the segmented region 57a etc., that is a total area of the displayed segmented region, thereby being able to grasp the boost remaining amount such as a remaining time in which the boost traveling can be performed, for example. Each of the segmented regions 57a etc. may express an amount in which a maximum boost remaining amount is equally divided or an amount in which a maximum boost remaining amount is non-equally divided.

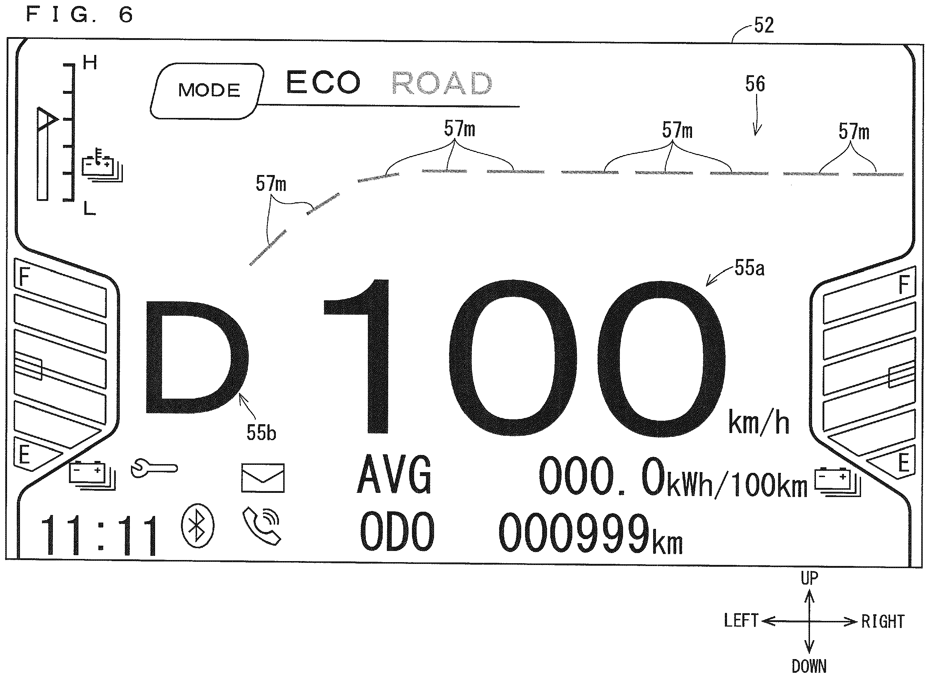

When the boost traveling is continued, the boost remaining amount becomes 0, and the display area of the boost limitation condition information image 57 is minimized, or none of the segmented regions 57a etc. is displayed as illustrated in Fig. 6. Accordingly, control of switching the mode from the boost travel mode to the normal travel mode is performed. The driver confirms the display, thereby being able to recognize that a time in which the boost travel can be performed becomes 0, for example. That is to say, the display area of the boost limitation condition information image 57 is also considered to have a size corresponding to the number of countdowns of a time after starting the boost traveling.

A memory image 57m corresponding to the boost remaining amount may be displayed in the boost limitation condition information image 57. The memory image 57m may be displayed regardless of presence or absence of the display of the segmented region 57a etc., or may also be displayed in a region which does not include the display of the segmented region 57a etc.

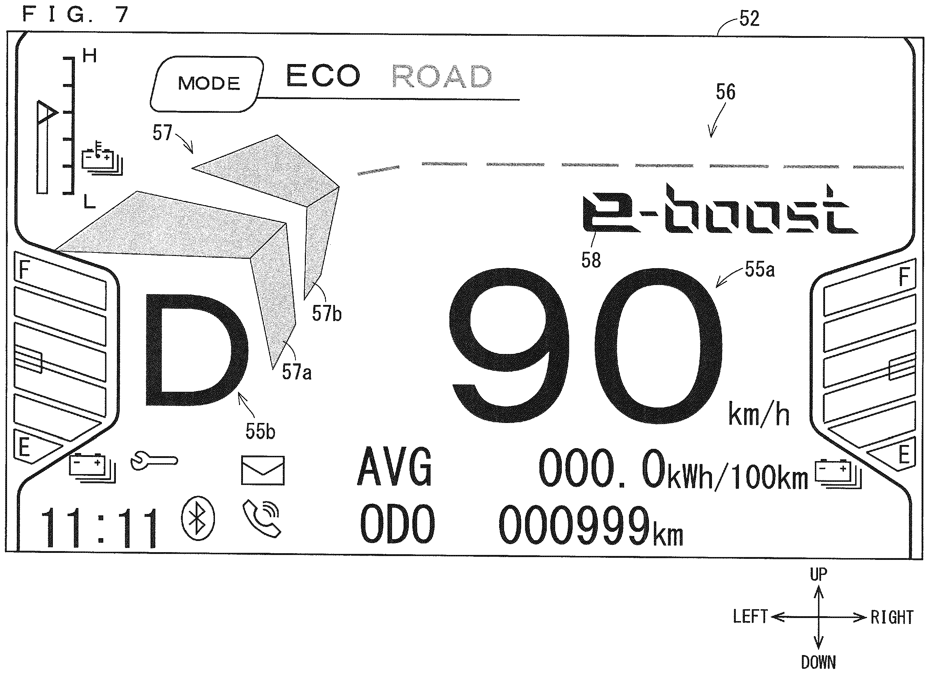

**In** Fig. 6 and Fig. 7, the memory image 57m is displayed in a region in a non-display state in the segmented region 57a etc. Each memory image 57m corresponds to each segmented region 57a etc. Each memory image 57m extends along a boundary between the first region and the second region in each segmented region 57a etc. The driver visually recognizes the memory image 57m, thereby being able to grasp a ratio of a current boost remaining amount to a maximum boost remaining amount.

The boost limitation condition information image 57 is displayed in the display device 50 not only in the boost mode but also a boost standby state before the boost switch 44 is pressed. **In** the present embodiment, the control device 61 changes the display form of the boost limitation condition information image 57 in the boost information image 56 between the boost mode state and the boost standby state. The boost standby state indicates one state of the normal travel mode. A state where the boost remaining amount remains in the normal travel mode (that is to say, a state where boost is not performed) is the boost standby state.

Fig. 7 is a diagram illustrating a display example in the display device 50 in the boost standby state. Fig. 7 illustrates a display example in the normal travel mode. For example, the boost traveling and the boost mode are assumed to be canceled when the boost remaining amount becomes zero by the boost traveling. Then, when a thermal load and a mechanical load on the travel part is eased by lapse of time, the boost traveling can be performed. It is also assumed that the boost limitation condition is eased and the boost remaining amount increases by continuing the normal travel mode. In such a case, the mode enters the boost standby state, and the boost limitation condition information image 57 is displayed in the display device 50. Accordingly, the boost standby state indicates a state switchable to the boost traveling and a state allowing the boost traveling in the normal travel mode.

The display form of the boost limitation condition information image 57 is different between the boost mode state and the boost standby state to clearly display the boost standby state for the driver. For example, it is assumed that a region color of the segmented region 57a etc. in the boost standby state is different from a background color, but is close to the background color compared with a region color of the segmented region 57a etc. in the boost mode state. For example, it is assumed that a region color of the segmented region 57a etc. in the boost standby state is an achromatic color, and a region color of the segmented region 57a etc. in the boost mode state is a chromatic color. For example, it is assumed that a region color of the segmented region 57a etc. in the boost standby state is a darker color than a region color of the segmented region 57a etc. in the boost mode state. It is preferable that the segmented region 57a etc. in the boost mode state is more noticeable than that in the boost standby state.

The state where the display form of the boost limitation condition information image 57 is changed between the boost mode state and the boost standby state may indicate any of a case where a color phase, color saturation, or brightness of the boost limitation condition information image 57 is changed and a case where a pattern or a shape of the boost limitation condition information image 57 is changed.

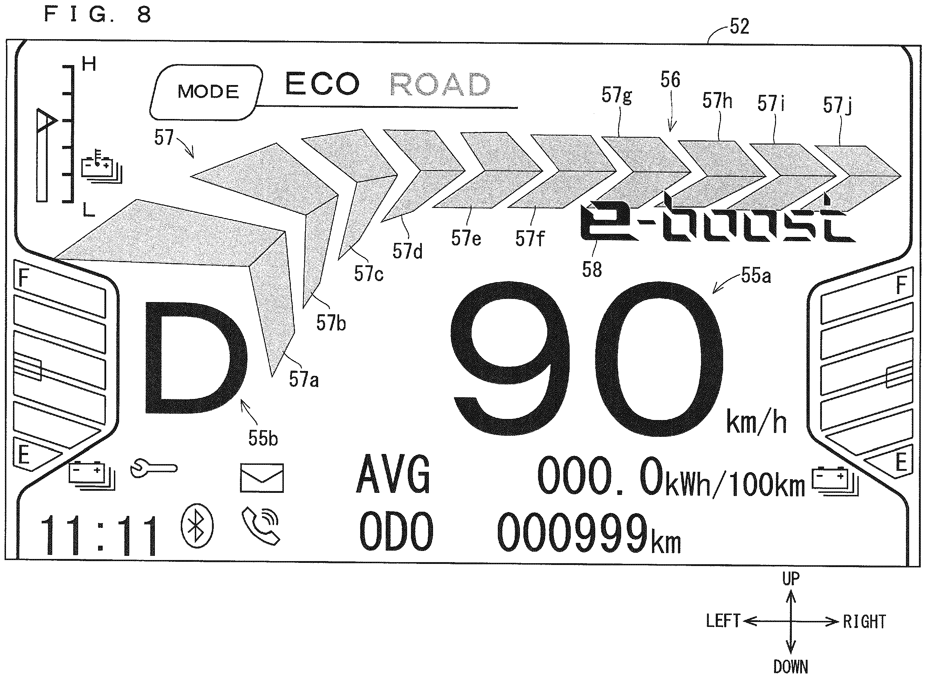

When the automatic two-wheel vehicle 10 travels in the normal travel mode and a state where the boost traveling is not performed is continued, the boost remaining amount is further increased, and all of the segmented regions 57a etc. are assumed to enter the display state as illustrated in Fig. 8.

The control device 61 controls the display of the display device 50 so that the display area of the boost limitation condition information image 57 is large as the boostable output amount is large.

**In** the present embodiment, each of the plurality of segmented regions 57a etc. includes the first region and the second region as described above. The display area of the plurality of segmented regions 57a etc. is changed in accordance with the boostable output amount.

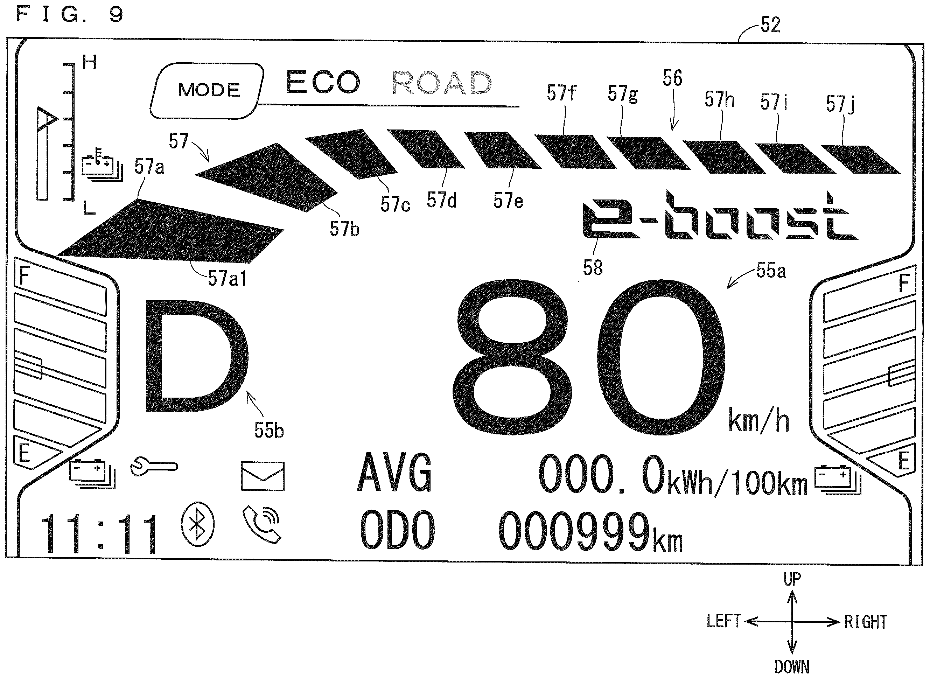

For example, both the first region and the second region are displayed in each of the plurality of segmented regions 57a etc. in the normal boost state where the boost traveling with the maximum output ma is allowed. **In** a state where the state falls under a predetermined limitation state and the output limitation boost traveling with the maximum output mb smaller than ma is allowed, one of the first region and the second region is assumed to be displayed in each of the plurality of segmented regions 57a etc. as illustrated in Fig. 9. Fig. 9 illustrates an example of displaying the first region on the upper side.

In the present embodiment, the boost information image 56 includes the boost permission display image 58 as described above. The boost permission display image 58 is an image displaying that the boost traveling can be performed. When it is determined that the boost traveling can be performed, the control device 61 explicitly displays the boost permission display image 58 in the display device 50 so that the boost permission display image 58 can be recognized.

The explicit display indicates that a state where the boost can be performed, which is meant by the boost permission display image 58, is displayed so that the driver can recognize the state. For example, when the boost permission display image 58 enters a recognizable state from a non-recognizable state, it is assumed that a difference of brightness between the background color and the boost permission display image 58 increases or a color of the boost permission display image 58 is changed from an achromatic color to a chromatic color.

### <Display processing example by control device>

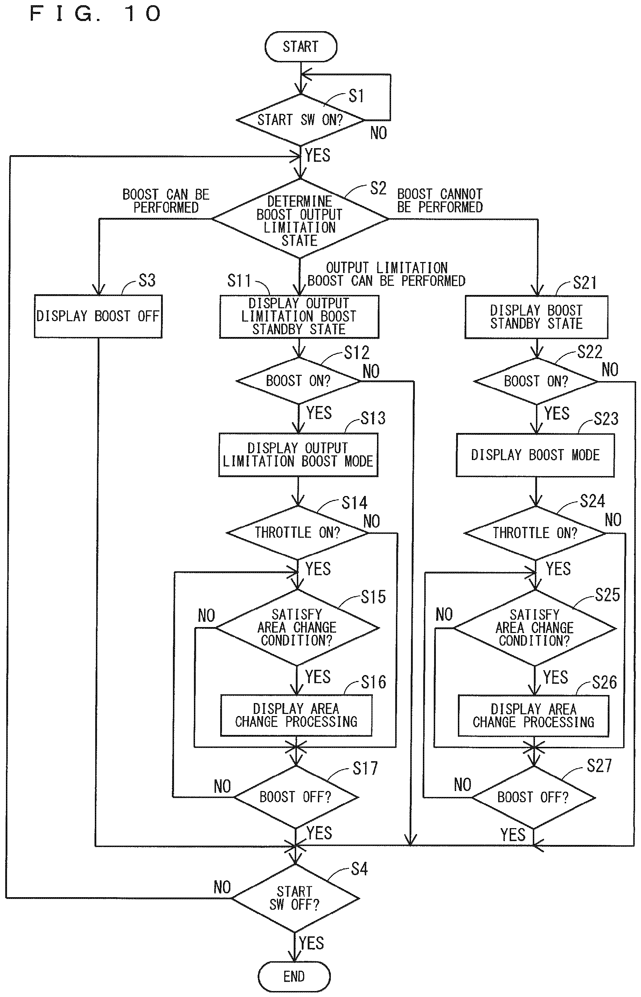

Fig. 10 is a flow chart illustrating a display processing example by the control device 61. The present processing is executed as a parallel or pseudo-parallel processing with processing performed by the control device 61 for traveling of the automatic two-wheel vehicle 10.

As illustrated in Step S1, the control device 61 determines whether the start switch 46 is turned on. Processing of Step S1 is repeated until the driver turns on the start switch 46. When it is determined that the start switch 46 is turned on, processing proceeds to Step S2.

In Step S2, the boost output limitation state is determined. The boost output limitation state is determined based on the output of a battery remaining amount sensor 69a, for example. For example, it is assumed that a first reference value and a second reference value larger than the first reference value are previously set. It is determined that the boost cannot be performed when the battery remaining amount is smaller than the predetermined first reference value. It is determined that the output limitation boost can be performed when the battery remaining amount is larger than the first reference value and smaller than the second reference value. It is determined that the boost can be performed when the battery remaining amount is larger than the second reference value. When the battery remaining amount is the same as the first reference value, applicable is any of the determination that the boost cannot be performed and the output limitation boost can be performed, and when the battery remaining amount is the same as the second reference value, applicable is any of the determination that the output limitation boost can be performed and the boost can be performed.

It may be determined that the boost cannot be performed in accordance with the other condition. For example, when a temperature of the battery 48 or the travel power source 30 is high, when an operation defect thereof is detected, or when a defect of output current is detected in the travel drive circuit 34, for example, it may be determined that the boost cannot be performed.

The boost output limitation state may be determined additionally based on the other state of the travel part. For example, the boost output limitation state may be determined additionally based on a temperature of the battery 48 or a temperature of the travel power source 30.

In Step S2, the process proceeds to Step S3 when it is determined that the boost cannot be performed, the process proceeds to Step S11 when it is determined that the output limitation boost can be performed, and the process proceeds to Step S21 when it is determined that the boost can be performed.

When the process proceeds to Step S3, the boost limitation condition information image 57 and the boost permission display image 58 enter an off state (refer to Fig. 6). Accordingly, the driver can recognize that the boost mode cannot be set. Note that the mode does not make a transition to the boost mode even when the driver operates the boost button in such a state.

The process then proceeds to Step S4. **In** Step S4, it is determined whether the start switch 46 is turned off. When it is determined that the start switch 46 is turned off, the process is finished, and when it is determined that the start switch 46 is not turned off, the process returns to Step S2 to repeat the process subsequent to the determination of the boost output limitation state.

When it is determined that the boost can be performed in Step S2, the process proceeds to Step S21. **In** Step S21, the boost standby state is displayed. **In** this state, the plurality of segmented regions 57a etc. are displayed in accordance with the boost remaining amount (refer to Fig. 8). The boost permission display image 58 is displayed. All of the plurality of segmented regions 57a etc. are not displayed in some cases depending on a state of the travel part or when a lapse time after a previous boost traveling is short.

The process then proceeds to Step S22. **In** Step S22, it is determined whether or not the boost mode enters an on state based on the output of the boost switch 44. When the boost switch 44 is operated and it is determined that the boost mode enters the on state, the process proceeds to Step S23. When the boost switch 44 is not operated and it is determined that the boost mode is kept in an off state, the process proceeds to Step S4.

**In** Step S23, the display form of the boost limitation condition information image 57 is changed to the display form for the boost mode state (refer to Fig. 4). For example, a region color of the segmented region 57a etc. of the boost limitation condition information image 57 is changed to a color away from a background color. Accordingly, the driver easily recognizes the boost mode.

When a state where the boost traveling is not performed is continued in the boost standby display state in Step S21 and the boost mode display state in Step S23, the number of displays of the plurality of segmented regions 57a etc. increases in some cases. For example, there is a case where some of the plurality of segmented regions 57a etc. is initially displayed in a case where a lapse time after a previous boost traveling is short, and the number of displays of the plurality of segmented regions 57a etc. gradually increases as a time in which the boost traveling is not performed increases subsequently. That is to say, there is a case where a time in which the boost traveling is not performed is counted up and the number of displays of the plurality of segmented regions 57a increases in accordance with the counted time.

**In** next Step S24, it is determined whether or not the throttle 42a is turned on. The process proceeds to Step S25 when it is determined that the throttle 42a is turned on, and the process proceeds to Step S27 when it is determined that the throttle 42a is not turned on.

When the process proceeds to Step S25, it is determined whether or not an area change condition is satisfied. The area change condition is a condition reducing the area of the boost limitation condition information image 57, and is a condition reducing the number of displays of the segmented regions 57a etc. herein. For example, when the boost remaining amount is a remaining time in which the boost traveling can be performed, the area change condition indicates whether or not a time in which the throttle 42a is an on state has elapsed for which the number of displays of the segmented regions 57a should be reduced. For example, when the maximum time, in which the boost traveling can be performed, indicating the boost remaining amount is 20 seconds, and each of the segmented regions 57a etc. indicates the boost travel time of two seconds, it is determined that a condition reducing the number of displays of the segmented regions 57a etc. every two seconds for which the throttle 42a is the on state is satisfied.

When it is determined that the area change condition is satisfied in Step S25, the process proceeds to Step S26, and when it is determined that the area change condition is not satisfied, the process proceeds to Step S27. The area of the boost limitation condition information image 57 is reduced in Step S26. The number of displays of the segmented regions 57a etc. is reduced herein. The process then proceeds to Step S27.

The process proceeds to Step S27 when it is determined that the throttle 42a is not in the on state in the next Step S24, when it is determined that the area change condition is not satisfied in Step S25, and after the process of Step S26 is performed.

In Step S27, it is determined whether or not a boost off condition is satisfied. The boost off condition is a condition for turning off the boost mode. The boost off condition indicates that a predetermined first time has elapsed after the boost mode is set in Step S22 and the operation has not been performed on the throttle 42a, for example. The boost off condition indicates that the operation on the throttle 42a is continued and the boost traveling state is continued for a predetermined second time. The boost off condition indicates that the operation on the throttle 42a is stopped, for example. The process returns to Step S25 when it is determined that any of these conditions is satisfied, and the process proceeds to Step S4 when it is determined that any of them is satisfied.

When it is determined that the output limitation boost can be performed in Step S2, the process proceeds to Step S11. The process from Steps S11 to S17 is similar to that from Steps S21 to S27. However, the process from Steps S11 to S17 is the process in the output limitation boostable state, thus the first region of the segmented region 57a etc. is displayed, and the second region is not displayed in Steps S11, S13, and S16. Also applicable is control so that the boost travel mode makes a transition to the normal travel mode after a predetermined time has elapsed even when the boost operation is performed (refer to the description regarding Step S17 which is the process similar to that in Step S27).

According to the display system 60 for the automatic two-wheel vehicle 10, the automatic two-wheel vehicle 10, and the display method for the automatic two-wheel vehicle 10 having the above configurations, the display area of the boost limitation condition information image 57 is changed in accordance with the limitation condition in the boost traveling. Thus, the driver visually recognizes the display area of the boost limitation condition information image 57, thereby being able to clearly recognize the limitation condition on the boost traveling. For example, the driver can intuitively grasp a degree of the boost limitation condition from a size of the display area of the image 57, and can easily grasp the boost limitation condition from increase and decrease in the display area of the image 57 compared with a case where the boost limitation condition is displayed by numerical value information.

The display area of the boost limitation condition information image 57 is large as the limitation condition in the boost traveling is eased. Thus, it can be recognized that the limitation condition in the boost traveling is eased as the display area of the boost limitation condition information image 57 is large.

Specifically, the display area of the boost limitation condition information image 57 is large as the boost remaining amount is large. Thus, it can be recognized that the boost remaining amount is large as the display area of the boost limitation condition information image 57 is large. Accordingly, the boost remaining amount which may be changed before the boost traveling or in the boost traveling can be clearly displayed by increase and decrease in the display area of the boost limitation condition information image 57. Furthermore, a magnitude of the boost remaining amount and a magnitude of the display area of the boost limitation condition information image 57 have a positive correlationship, thus the magnitude of the boost remaining amount can be intuitively grasped from the display area of the boost limitation condition information image 57.

The number of displays of the segmented regions 57a etc. is increased as the boost remaining amount is large, thus the boost remaining amount is grasped in accordance with the number of displays of the segmented regions 57a etc.

The initial segmented display region 57a is the region bended into the L-like shape, thus the other vehicle information image 54 in the display device 50 can be displayed on an inner side of the region bended into the L-like shape. The initial segmented display region 57a is disposed near the vehicle information image 54, thus it is easily recognized that the boost can be performed. The initial segmented display region 57a is the region bended into the L-like shape, thus the area of the initial segmented display region 57a can be easily increased. Also from this viewpoint, it is easily recognized that the boost can be performed.

The initial segmented display region 57a has the largest display area in the segmented regions 57a etc., thus it is easily recognized that the boost can be performed.

The display area of the boost limitation condition information image 57 is large as the boostable output amount is large. Thus, the boostable output amount can be clearly displayed by the size of the display area of the boost limitation condition information image 57 before the boost traveling or in the boost traveling.

The number of displays of the segmented regions 57a etc. is changed in accordance with the boost remaining amount, and the display area of each of the segmented regions 57a etc. is changed in accordance with the boostable output amount. Accordingly, the boost remaining amount is grasped by the number of displays of the segmented regions 57a etc., the boostable output amount is grasped by the display area of each segmented region 57a etc., and both the boost remaining amount and the boostable output amount are easily expressed.

The boost information image 56 includes the boost permission display image 58, and when it is determined that the boost traveling can be performed, the boost permission display image 58 is explicitly displayed in the display device 50 so that the boost permission display image 58 can be recognized. Thus, the driver recognizes the boost permission display image 58, thereby being able to easily recognize that the boost traveling can be performed.

The gear information image 55b as the example of the vehicle information image 54 is located adjacent to the initial segmented display region 57a. It is considered that the driver often focuses on the gear information image 55b as the example of the vehicle information image 54. The initial segmented display region 57a is located adjacent to the gear information image 55b, thus it is easily recognized that the boost can be performed.

The vehicle information image displayed adjacent to the initial segmented display region 57a may not be the gear information image 55b, but may be the battery remaining amount image 55c or the battery temperature image 55d, for example. When the vehicle is a hybrid automobile including an electrical motor and an internal combustion engine, the vehicle information image may be information indicating the hybrid automobile is in a state of hybrid traveling or traveling by an electrical motor. When the vehicle has an automatic transmission (AT) mode and a manual transmission (MT) mode, the vehicle information image may be an image indicating switching information of switching between AT and MT.

The display form of the boost information image 56 is changed between the boost mode state and the boost standby state. Herein, the display form of the boost limitation condition information image 57 is changed. Thus, it can be grasped whether the mode is the boost mode state or the boost standby state by the display form of the boost limitation condition information image 57.

### {Modification example}

The display device 50 may have a different display mode in accordance with ambient brightness. For example, brightness of a background in a dark environment such as nighttime may be lower than that in a bright environment such as daytime. In this case, it is sufficient that the brightness is changed for each background of the image displayed in the background to noticeably display the image in each background, for example. Accordingly, display contents of the display device 50 is visually recognized easily in accordance with ambient brightness.

The description in the above embodiment is based on the assumption that the travel power source 30 is mainly the example of the electrical motor. However, the display system and the display method described in the embodiment are also applicable to a vehicle including and internal combustion engine in place of or in addition to the electrical motor.

That is to say, the display system can include not only the hybrid vehicle but also a vehicle having an electrical motor as a single drive source and a vehicle having an internal combustion engine as a single drive source. The display system can also be applied to a power-assisted bicycle or a vehicle having three or more wheels in addition to the automatic two-wheel vehicle. The display system can also be applied to a vehicle with a shifter including a gearbox.

When the vehicle is the hybrid vehicle, an increase amount of output in the boost traveling is preferably handled by increase in output by the electrical motor. In this case, increase in exhaust gas according to the increase in output can be suppressed. The increase amount of output in the boost traveling is not limited to the increase in output by the electrical motor, however, the present embodiment also includes a case of applying an internal combustion engine together or increasing output by a single internal combustion engine.

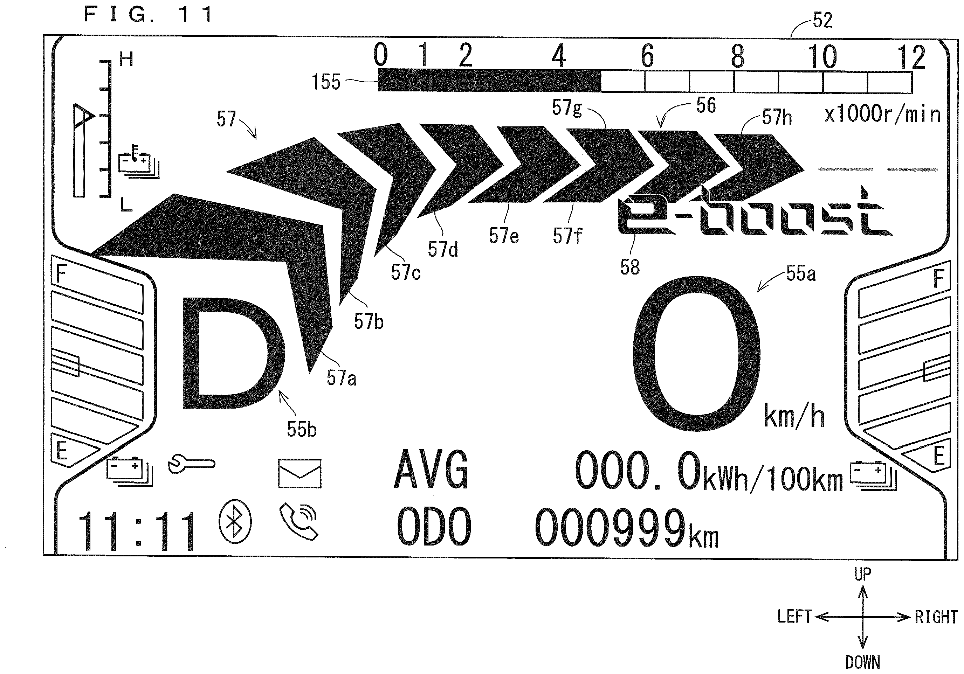

When the display system and the display method described above are applied to a vehicle including an internal combustion engine, a rotation number information image 155 indicating the number of rotations of a power engine in a bar form may be displayed on the display screen 52 of the display device 50 as illustrated in Fig. 11. **In** the bar form, expression of the number of rotations of the power engine by the bar form indicates expression of the number of rotations of the power engine by a length of a rod-like display region. Thus, the rotation number information image 155 gets longer as the number of rotations of the power engine increases.

The rotation number information image 155 extends along a right-left direction in a position on an upper side of the boost limitation condition information image 57. The rotation number information image 155 is arranged in parallel to the segmented regions 57d, 57e, 57f, 57g, 57h, 57i, and 57j.

A left end of the rotation number information image 155 corresponds to a rotation number 0 and a right end thereof corresponds to a maximum rotation number. The rotation number information image 155 increases in length in a right direction by increase in the number of rotations of the power engine based on the left end. Thus, a direction in which the length of the rotation number information image 155 increases by the increase in the number of rotations and a direction in which a display length of the segmented region 57a etc. increases by reduction in the limitation condition in the boost traveling coincide with each other. The reduction in the limitation condition in the boost traveling indicates that the limitation is eased and the boost remaining amount increases.

According to this display example, a pattern of increase and decrease in the display area of the rotation number information image 155 is similar to that of the boost limitation condition information image 57, thus the driver easily grasps the reduction in the limitation condition in the boost traveling.

The boost limitation condition information image 57 is located between the speed information image 55a and the rotation number information image 155, thus the driver sees the boost limitation condition information image 57 while confirming the speed and the number of rotations, thereby easily grasping the limitation condition.

**In the** example described in the above embodiment, the boost limitation condition information image 57 is displayed in the display device 50 displaying the vehicle information image 54 including the speed information image 55a. The boost limitation condition information image 57 may be displayed in the other display device different from the display device 50 displaying the vehicle information image 54 including the speed information image 55a, for example. For example, the boost limitation condition information image 57 may be displayed in a display device of a mobile terminal device such as a smartphone. **In** this case, a processing function of changing the display area of the boost limitation condition information image may be achieved by a control part of the mobile terminal device or a control part included in the vehicle. **In** the former case, a program for the control part of the mobile terminal device to perform display control of the display device may be provided in a form of an application program.

**In the** example described in the above embodiment, the boost limitation condition information image 57 is displayed in both the boost mode state and the boost standby state. However, the boost limitation condition information image 57 may be displayed in the boost mode state or the boost standby state.

**In** the embodiment described above, the display area of the boost limitation condition information image 57 may increase or decrease in a smaller or larger unit. For example, the display area of the boost limitation condition information image 57 may increase or decrease in a unit of display pixel of the display device 50.

**In** the present embodiment, the boost limitation condition is set in consideration of a thermal load and a mechanical load on a part operated in traveling. The boost limitation condition may be set in consideration of the other factor as the other embodiment. For example, the boost limitation condition may be set in consideration of a factor regarding operability of a driver, a factor regarding a traffic regulation, and a factor regarding an ambient environment such as a type of a travel route, a state of a road surface, weather, and an environment temperature. The boost limitation condition may be changed based on a vehicle state such as a gear ratio or a vehicle speed.

The boost permission display image 58 may be omitted. When a defect occurs in the travel power source 30, there may be a case where the boost is not allowed and the boost permission display image 58 and the boost limitation condition information image 57 are not displayed.

The area of the boost limitation condition information image 57 may increase or decrease contrary to the case in the description in the above embodiment. That is to say, also applicable as the other embodiment is a case where the display is performed so that the display area decreases as the remaining amount increases and the display area increases as the remaining amount decreases.

**In** the present embodiment, the boost limitation condition information image 57 is a horizontally long meter display form. The area is changed in a lateral direction, thus an area change amount can be easily increased. **In** this manner, the display area is preferably changed in a direction along a longitudinal direction of the boost limitation condition information image 57 in the meter display form. As the other embodiment, a change of an area in a vertical direction is applicable instead of the change of the area in the lateral direction, and also applicable as the other embodiment is an example that the area of the boost limitation condition information image is changed in the other direction in addition to or in place of the change of the area thereof in the vertical or lateral direction.

In the saddle-riding vehicle, a vehicle body is operated by a weight shift of the driver in some cases. In this case, a position of the driver with respect to the display device 50 is changed, thus visibility of the display device 50 with respect to the driver decreases in some cases. The boost limitation condition is displayed based on the area of the display region as with the present embodiment, thus decrease in visibility of the boost limitation condition for the driver can be suppressed even when the position of the driver with respect to the display device 50 is changed by the weight shift of the driver. The saddle-riding vehicle is not provided with a roof covering the driver in many cases. In this case, solar light is reflected by a meter, thus visibility of display contents decreases in some cases. When the display device 50 is fixed to the handle, visibility of display contents decreases in some cases due to a change of a direction of the display device 50 together with the handle operation. In such a case, as described above, the boost limitation condition is displayed based on the area of the display region as with the present embodiment, thus decrease in visibility of the limitation condition for the driver can be suppressed.

Each configuration described in the above-mentioned embodiments and each modification example can be combined with each other as appropriate unless any contradiction occurs.

The functionality of the elements disclosed in the present specification may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. **In** the invention, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

## Claims

1. A display system (60) for a vehicle (10) which can perform boost traveling, comprising:
a display device (50) being configured to display a boost information image (56) including a boost limitation condition information image (57) indicating boost limitation condition information; and
a display control part (61) being configured to control display of the display device to change a display area of the boost limitation condition information image in accordance with a limitation condition in the boost traveling,
**characterized in that**
the boost limitation condition information image (57) is displayed in the display device (50) in each of a boost mode state and a boost standby state, and
the display control part (61) is configured to change a display form of the boost information image (56) between the boost mode state and the boost standby state.

2. The display system for the vehicle according to claim 1, wherein
the boost limitation condition information image (57) is displayed to be different from a background color, and
a region color of the boost limitation condition information image (57) in the boost standby state is close to the background color compared with a region color of the boost limitation condition information image (57) in the boost mode state.

3. The display system for the vehicle according to claim 1 or 2, wherein
a region color of the boost limitation condition information image (57) in the boost standby state is an achromatic color, and a region color of the boost limitation condition information image (57) in the boost mode state is a chromatic color.

4. The display system for the vehicle according to any one of claims 1 to 3, wherein
a limitation condition in the boost traveling includes a boost remaining amount,
the display control part (61) controls display of the display device so that a display area of the boost limitation condition information image (57) is large as the boost remaining amount is large,
the boost limitation condition information image (57) includes a plurality of segmented regions (57a, 57b, 57c, 57d, 57e, 57f, 57g, 57h, 57i, 57j),
the display control part (61) increases a total number of displays of the plurality of segmented regions as the boost remaining amount is large, and
the plurality of segmented regions is located close to a region initially displayed when the boost can be performed and includes a plurality of segmented regions (57a, 57b, 57c and 57d) having larger display areas the smaller the boost remaining amount gets.

5. The display system for the vehicle according to any one of claims 1 to 4, wherein
the boost limitation condition information image (57) includes a plurality of segmented regions (57a, 57b, 57c, 57d, 57e, 57f, 57g, 57h, 57i, 57j),
the plurality of segmented regions include an initial segmented display region (57a) initially displayed when boost can be performed, and
the initial segmented display region is a region bended into an L-like shape.

6. The display system for the vehicle according to any one of claims 1 to 5, wherein
the boost limitation condition information image (57) includes a plurality of segmented regions (57a, 57b, 57c, 57d, 57e, 57f, 57g, 57h, 57i, 57j),
the plurality of segmented regions include an initial segmented display region (57a) initially displayed when boost can be performed, and
the initial segmented display region (57a) has a largest display area in the plurality of segmented regions.

7. The display system for the vehicle according to any one of claims 1 to 6, wherein
a limitation condition in the boost traveling includes a boostable output amount, and
the display control part (61) is configured to control display of the display device so that a display area of the boost limitation condition information image (57) is large as the boostable output amount is large.

8. The display system for the vehicle according to any one of claims 1 to 7, wherein
a limitation condition in the boost traveling includes a boost remaining amount and a boostable output amount,
the boost limitation condition information image (57) includes a plurality of segmented regions (57a, 57b, 57c, 57d, 57e, 57f, 57g, 57h, 57i, 57j), and
the display control part (61) is configured to change a total number of the plurality of segmented regions in accordance with the boost remaining amount, and change a display area of each of the plurality of segmented regions (57a1, 57a2) in accordance with the boostable output amount.

9. The display system for the vehicle according to any one of claims 1 to 8, wherein
the boost information image (56) includes a boost permission display image (58) displaying that boost traveling can be performed, and
when it is determined that boost traveling can be performed, the display control part (61) is configured to explicitly display the boost permission display image (58) in the display device so that the boost permission display image can be recognized.

10. The display system for the vehicle according to any one of claims 1 to 9, wherein
the display device (50) is configured to display a vehicle information image (54) indicating vehicle state information indicating a vehicle state,
the boost limitation condition information image (57) includes a plurality of segmented regions (57a, 57b, 57c, 57d, 57e, 57f, 57g, 57h, 57i, 57j),
the plurality of segmented regions include an initial segmented display region (57a) initially displayed when boost can be performed, and
the vehicle information image (54) is located adjacent to the initial segmented display region (57a).

11. The display system for the vehicle according to any one of claims 1 to 10, wherein
the display device (50) is configured to display a rotation number information image (155) indicating a total number of rotations of a power engine in a bar form,
the boost limitation condition information image (57) includes a plurality of segmented regions (57a, 57b, 57c, 57d, 57e, 57f, 57g, 57h, 57i, 57j) arranged along an extension direction of the rotation number information image, and
a direction in which a length of the rotation number information image increases by increase in the number of rotations of the power engine and a direction in which a display length of the plurality of segmented regions increases by reduction in a limitation condition in boost traveling coincide with each other.

12. The display system for the vehicle according to any one of claims 1 to 11, in the boost mode state, the boost limitation condition information image (57) is displayed to be more noticeable than that in the boost standby state.

13. The display system for the vehicle according to any one of claims 1 to 12, wherein in the boost standby state, a boost permission display image (58) is displayed separately from the boost limitation condition information image (57).

14. A saddle-riding vehicle (10) which can perform boost traveling including the display system (60) for the vehicle according to any one of claims 1 to 13.

15. A display method for a vehicle (10) which can perform boost traveling, comprising:
displaying a boost information image (56) including a boost limitation condition information image (57) indicating boost limitation condition information; and
changing a display area of the boost limitation condition information image (57) in accordance with a limitation condition in the boost traveling, the boost limitation condition information image (57) including a plurality of segmented regions, the plurality of segmented regions including an initial segmented display region displayed firstly when the boost can be performed, **characterized in that**
the initial segmented display region has a largest display area in the plurality of segmented regions.

## Patentansprüche

1. Anzeigesystem (60) für ein Fahrzeug (10), das eine Boostfahrt durchführen kann, umfassend:
eine Anzeigevorrichtung (50), die eingerichtet ist, ein Boostinformationsbild (56) anzuzeigen, das ein Boostbegrenzungszustandsinformationsbild (57) umfasst, das Boostbegrenzungszustandsinformationen angibt; und
einen Anzeigesteuerteil (61), der eingerichtet ist, die Anzeige der Anzeigevorrichtung zu steuern, um einen Anzeigebereich des Boostbegrenzungszustandsinformationsbildes entsprechend einem Begrenzungszustand beim Boostfahren zu ändern, **dadurch gekennzeichnet, dass**
das Boostbegrenzungszustandsinformationsbild (57) in der Anzeigevorrichtung (50) sowohl im Boostmoduszustand als auch in einem Booststandbyzustand angezeigt wird, und
der Anzeigesteuerteil (61) eingerichtet ist, eine Anzeigeform des Boostinformationsbildes (56) zwischen dem Boostmoduszustand und dem Booststandbyzustand zu ändern.

2. Anzeigesystem für das Fahrzeug nach Anspruch 1, wobei
das Boostbegrenzungszustandsinformationsbild (57) derart angezeigt wird, dass es sich von einer Hintergrundfarbe unterscheidet, und
eine Bereichsfarbe des Boostbegrenzungszustandsinformationsbildes (57) im Booststandbyzustand nahe an der Hintergrundfarbe ist, im Vergleich mit einer Bereichsfarbe des Boostbegrenzungszustandsinformationsbildes (57) im Boostmoduszustand

3. Anzeigesystem für das Fahrzeug nach Anspruch 1 oder 2, wobei
eine Bereichsfarbe des Boostbegrenzungszustandsinformationsbildes (57) im Booststandbyzustand eine achromatische Farbe ist, und eine Bereichsfarbe des Boostbegrenzungszustandsinformationsbildes (57) im Boostmoduszustand eine chromatische Farbe ist.

4. Anzeigesystem für das Fahrzeug nach einem der Ansprüche 1 bis 3, wobei
ein Begrenzungszustand beim Boostfahren eine Boostrestmenge umfasst,
der Anzeigesteuerteil (61) die Anzeige der Anzeigevorrichtung derart steuert, dass ein Anzeigebereich des Boostbegrenzungszustandsinformationsbildes (57) groß ist, wenn die Boostrestmenge groß ist,
das Boostbegrenzungszustandsinformationsbild (57) eine Vielzahl von segmentierten Bereichen (57a, 57b, 57c, 57d, 57e, 57f, 57g, 57h, 57i, 57j) umfasst,
der Anzeigesteuerteil (61) eine Gesamtzahl von Anzeigen der Vielzahl von segmentierten Bereichen erhöht, wenn die Boostrestmenge groß ist, und
die Vielzahl von segmentierten Bereichen sich in der Nähe eines Bereichs befindet, der anfänglich angezeigt wird, wenn der Boost durchgeführt werden kann, und eine Vielzahl von segmentierten Bereichen (57a, 57b, 57c und 57d) umfasst, die größere Anzeigeflächen aufweisen, je kleiner die Boostrestmenge wird.

5. Anzeigesystem für das Fahrzeug nach einem der Ansprüche 1 bis 4, wobei
das Boostbegrenzungszustandsinformationsbild (57) eine Vielzahl von segmentierten Bereichen (57a, 57b, 57c, 57d, 57e, 57f, 57g, 57h, 57i, 57j) umfasst,
die Vielzahl von segmentierten Bereichen einen anfänglich segmentierten Anzeigebereich (57a) umfassen, der anfänglich angezeigt wird, wenn der Boost durchgeführt werden kann, und
der anfänglich segmentierte Anzeigebereich ein L-förmig gebogener Bereich ist.

6. Anzeigesystem für das Fahrzeug nach einem der Ansprüche 1 bis 5, wobei
das Boostbegrenzungszustandsinformationsbild (57) eine Vielzahl von segmentierten Bereichen (57a, 57b, 57c, 57d, 57e, 57f, 57g, 57h, 57i, 57j) umfasst,
die Vielzahl von segmentierten Bereichen einen anfänglich segmentierten Anzeigebereich (57a) umfasst, der anfänglich angezeigt wird, wenn der Boost durchgeführt werden kann, und
der anfängliche segmentierte Anzeigebereich (57a) eine größte Anzeigefläche in der Vielzahl der segmentierten Bereiche aufweist.

7. Anzeigesystem für das Fahrzeug nach einem der Ansprüche 1 bis 6, wobei
ein Begrenzungszustand beim Boostfahren eine boostbare Ausgangsmenge umfasst, und
der Anzeigesteuerteil (61) eingerichtet ist, die Anzeige der Anzeigevorrichtung derart zu steuern, dass ein Anzeigebereich des Boostbegrenzungszustandsinformationsbildes (57) groß ist, wenn die boostbare Ausgangsmenge groß ist.

8. Anzeigesystem für das Fahrzeug nach einem der Ansprüche 1 bis 7, wobei
ein Begrenzungszustand beim Boostfahren eine Boostrestmenge und eine boostbare Ausgangsmenge umfasst,
das Boostbegrenzungszustandsinformationsbild (57) eine Vielzahl von segmentierten Bereichen (57a, 57b, 57c, 57d, 57e, 57f, 57g, 57h, 57i, 57j) umfasst, und
der Anzeigesteuerteil (61) eingerichtet ist, eine Gesamtzahl der Vielzahl von segmentierten Bereichen entsprechend der Boostrestmenge zu ändern und einen Anzeigebereich jedes der Vielzahl von segmentierten Bereichen (57a1, 57a2) entsprechend dem boostbaren Ausgabebetrag zu ändern.

9. Anzeigesystem für das Fahrzeug nach einem der Ansprüche 1 bis 8, wobei
das Boostinformationsbild (56) ein Boostserlaubnisanzeigebild (58) umfasst, das anzeigt, dass eine Boostfahrt durchgeführt werden kann, und
wenn bestimmt wird, dass die Boostfahrt durchgeführt werden kann, das Anzeigesteuerteil (61) eingerichtet ist, explizit das Boosterlaubnisanzeigebild (58) in der Anzeigevorrichtung derart anzuzeigen, dass das Boosterlaubnisanzeigebild erkannt werden kann.

10. Anzeigesystem für das Fahrzeug nach einem der Ansprüche 1 bis 9, wobei
die Anzeigevorrichtung (50) eingerichtet ist, ein Fahrzeuginformationsbild (54) anzuzeigen, das Fahrzeugzustandsinformationen angibt, die einen Fahrzeugzustand angeben,
das Boostbegrenzungszustandsinformationsbild (57) eine Vielzahl von segmentierten Bereichen (57a, 57b, 57c, 57d, 57e, 57f, 57g, 57h, 57i, 57j) umfasst,
die Vielzahl von segmentierten Bereichen einen anfänglich segmentierten Anzeigebereich (57a) umfasst, der anfänglich angezeigt wird, wenn der Boost durchgeführt werden kann, und
das Fahrzeuginformationsbild (54) sich neben dem anfänglichen segmentierten Anzeigebereich (57a) befindet.

11. Anzeigesystem für das Fahrzeug nach einem der Ansprüche 1 bis 10, wobei
die Anzeigevorrichtung (50) eingerichtet ist, ein Umdrehungszahlinformationsbild (155) anzuzeigen, das eine Gesamtzahl von Umdrehungen eines Antriebsmotors in einer Balkenform angibt,
das Boostbegrenzungszustandsinformationsbild (57) eine Vielzahl von segmentierten Bereichen (57a, 57b, 57c, 57d, 57e, 57f, 57g, 57h, 57i, 57j) umfasst, die entlang einer Ausdehnungsrichtung des Umdrehungszahlinformationsbildes angeordnet sind, und
eine Richtung, in der eine Länge des Umdrehungszahlinformationsbildes durch Erhöhung der Anzahl von Umdrehungen des Antriebsmotors zunimmt, und eine Richtung, in der eine Anzeigelänge der Vielzahl von segmentierten Bereichen durch Verringerung einer Begrenzungsbedingung bei der Boostfahrt, die miteinander übereinstimmt, zunimmt.

12. Anzeigesystem für das Fahrzeug nach einem der Ansprüche 1 bis 11, wobei das Boostbegrenzungszustandsinformationsbild (57) im Boostmoduszustand auffälliger angezeigt wird als im Booststandbyzustand.

13. Anzeigesystem für das Fahrzeug nach einem der Ansprüche 1 bis 12, wobei im Booststandbyzustand ein Boosterlaubnisanzeigebild (58) getrennt vom Boostbegrenzungszustandsinformationsbild (57) angezeigt wird.

14. Sattelkraftfahrzeug (10), das eine Boostfahrt durchführen kann, einschließlich des Anzeigesystems (60) für das Fahrzeug nach einem der Ansprüche 1 bis 13.

15. Anzeigeverfahren für ein Fahrzeug (10), das eine Boostfahrt durchführen kann, umfassend:
Anzeigen eines Boostinformationsbildes (56), das ein Boostbegrenzungsbedingungsinformationsbild (57) umfasst, das Boostbegrenzungsbedingungsinformationen angibt, und Ändern eines Anzeigebereichs des Boostbegrenzungsbedingungsinformationsbildes (57) entsprechend einer Begrenzungsbedingung beim Boostfahren, wobei das Boostbegrenzungsbedingungsinformationsbild (57) eine Vielzahl von segmentierten Bereichen umfasst, wobei die Vielzahl von segmentierten Bereichen einen anfänglichen segmentierten Anzeigebereich umfasst, der zuerst angezeigt wird, wenn der Boost durchgeführt werden kann, **dadurch gekennzeichnet, dass** der anfängliche segmentierte Anzeigebereich einen größten Anzeigebereich in der Vielzahl von segmentierten Bereichen aufweist.

## Revendications

1. Système d'affichage (60) pour un véhicule (10) qui peut effectuer des déplacements en mode suralimenté, comprenant :
un dispositif d'affichage (50) configuré pour afficher une image d'informations de suralimentation (56) comprenant une image d'informations de conditions de limitation de suralimentation (57) indiquant des informations de conditions de limitation de suralimentation ; et
une partie de commande d'affichage (61) configurée pour commander l'affichage du dispositif d'affichage afin de modifier une zone d'affichage de l'image d'informations de conditions de limitation de suralimentation en fonction d'une condition de limitation dans le déplacement en mode suralimenté,
**caractérisé en ce que** l'image d'informations de conditions de limitation de suralimentation (57) est affichée sur le dispositif d'affichage (50) dans chacun d'un état de mode de suralimentation et d'un état de veille de suralimentation, et
la partie de commande d'affichage (61) est configurée pour modifier une forme d'affichage de l'image d'informations de suralimentation (56) entre l'état de mode de suralimentation et l'état de veille de suralimentation.

2. Système d'affichage pour le véhicule selon la revendication 1, l'image d'informations de conditions de limitation de suralimentation (57) étant affichée de manière à être différente d'une couleur d'arrière-plan, et
une couleur de région de l'image d'informations de conditions de limitation de suralimentation (57) dans l'état de veille de suralimentation étant proche de la couleur d'arrière-plan par rapport à une couleur de région de l'image d'informations de conditions de limitation de suralimentation (57) dans l'état de mode de suralimentation.

3. Système d'affichage pour le véhicule selon la revendication 1 ou 2,
une couleur de région de l'image d'informations de conditions de limitation de suralimentation (57) dans l'état de veille de suralimentation étant une couleur achromatique et une couleur de région de l'image d'informations de conditions de limitation de suralimentation (57) dans l'état de mode de suralimentation étant une couleur chromatique.

4. Système d'affichage pour le véhicule selon l'une des revendications 1 à 3,
une condition de limitation dans le déplacement en mode suralimenté comprenant une quantité résiduelle de suralimentation,
la partie de commande d'affichage (61) commandant l'affichage du dispositif d'affichage de manière à ce qu'une zone d'affichage de l'image d'informations de conditions de limitation de suralimentation (57) soit grande lorsque la quantité résiduelle de suralimentation est grande,
l'image d'informations de conditions de limitation de suralimentation (57) comprenant une pluralité de régions segmentées (57a, 57b, 57c, 57d, 57e, 57f, 57g, 57h, 57i, 57j),
la partie de commande d'affichage (61) augmentant un nombre total d'affichages de la pluralité de régions segmentées lorsque la quantité résiduelle de suralimentation est grande, et
la pluralité de régions segmentées étant située à proximité d'une région initialement affichée lorsque la suralimentation peut être effectuée et comprenant une pluralité de régions segmentées (57a, 57b, 57c et 57d) ayant des zones d'affichage qui sont d'autant plus grandes que la quantité résiduelle de suralimentation diminue.

5. Système d'affichage pour le véhicule selon l'une des revendications 1 à 4,
l'image d'informations de conditions de limitation de suralimentation (57) comprenant une pluralité de régions segmentées (57a, 57b, 57c, 57d, 57e, 57f, 57g, 57h, 57i, 57j),
la pluralité de régions segmentées comprenant une région d'affichage segmentée initiale (57a) initialement affichée lorsque la suralimentation peut être effectuée, et
la région d'affichage segmentée initiale étant une région pliée en forme de L.

6. Système d'affichage pour le véhicule selon l'une des revendications 1 à 5,
l'image d'informations de conditions de limitation de suralimentation (57) comprenant une pluralité de régions segmentées (57a, 57b, 57c, 57d, 57e, 57f, 57g, 57h, 57i, 57j),
la pluralité de régions segmentées comprenant une région d'affichage segmentée initiale (57a) initialement affichée lorsque la suralimentation peut être effectuée, et
la région d'affichage segmentée initiale (57a) présentant une zone d'affichage la plus grande dans la pluralité de régions segmentées.

7. Système d'affichage pour le véhicule selon l'une des revendications 1 à 6,
une condition de limitation dans le déplacement en mode suralimenté comprenant une quantité de sortie pouvant être suralimentée et
la partie de commande d'affichage (61) étant configurée pour commander l'affichage du dispositif d'affichage de manière à ce qu'une zone d'affichage de l'image d'informations de conditions de limitation de suralimentation (57) soit grande lorsque la quantité de sortie pouvant être suralimentée est grande.

8. Système d'affichage pour le véhicule selon l'une des revendications 1 à 7,
une condition de limitation dans le déplacement en mode suralimenté comprenant une quantité résiduelle de suralimentation et une quantité de sortie pouvant être suralimentée,
l'image d'informations de conditions de limitation de suralimentation (57) comprenant une pluralité de régions segmentées (57a, 57b, 57c, 57d, 57e, 57f, 57g, 57h, 57i, 57j), et
la partie de commande d'affichage (61) étant configurée pour modifier un nombre total de la pluralité de régions segmentées en fonction de la quantité résiduelle de suralimentation, et modifier une zone d'affichage de chacune de la pluralité de régions segmentées (57a1, 57a2) en fonction de la quantité de sortie pouvant être suralimentée.

9. Système d'affichage pour le véhicule selon l'une des revendications 1 à 8,
l'image d'informations de suralimentation (56) comprenant une image d'affichage de permission de suralimentation (58) affichant qu'un déplacement en mode suralimenté peut être effectué, et
lorsqu'il est déterminé qu'un déplacement en mode suralimenté peut être effectué, la partie de commande d'affichage (61) étant configurée pour afficher explicitement l'image d'affichage de permission de suralimentation (58) dans le dispositif d'affichage de manière à que l'image d'affichage de permission de suralimentation puisse être reconnue.

10. Système d'affichage pour le véhicule selon l'une des revendications 1 à 9,
le dispositif d'affichage (50) étant configuré pour afficher une image d'informations sur le véhicule (54) indiquant des informations d'état du véhicule indiquant un état du véhicule,
l'image d'informations de conditions de limitation de suralimentation (57) comprenant une pluralité de régions segmentées (57a, 57b, 57c, 57d, 57e, 57f, 57g, 57h, 57i, 57j),
la pluralité de régions segmentées comprenant une région d'affichage segmentée initiale (57a) initialement affichée lorsque la suralimentation peut être effectuée, et
l'image d'informations sur le véhicule (54) étant située à côté de la région d'affichage segmentée initiale (57a).

11. Système d'affichage pour le véhicule selon l'une des revendications 1 à 10,
le dispositif d'affichage (50) étant configuré pour afficher une image d'informations sur le nombre de rotations (155) indiquant un nombre total de rotations d'un moteur sous forme de barre,
l'image d'informations de conditions de limitation de suralimentation (57) comprenant une pluralité de régions segmentées (57a, 57b, 57c, 57d, 57e, 57f, 57g, 57h, 57i, 57j) disposées le long d'une direction d'extension de l'image d'informations sur le nombre de rotations, et
une direction dans laquelle une longueur de l'image d'informations sur le nombre de rotations augmente en raison d'une augmentation du nombre de rotations du moteur et une direction dans laquelle une longueur d'affichage de la pluralité de régions segmentées augmente en raison d'une réduction d'une condition de limitation dans le déplacement en mode suralimenté coïncidant l'une avec l'autre.

12. Système d'affichage pour le véhicule selon l'une des revendications 1 à 11, dans l'état de mode de suralimentation, l'image d'informations de conditions de limitation de suralimentation (57) étant affichée de manière à être plus perceptible que celle dans l'état de veille de suralimentation.

13. Système d'affichage pour le véhicule selon l'une des revendications 1 à 12, dans l'état de veille de suralimentation, une image d'affichage de permission de suralimentation (58) étant affichée séparément de l'image d'informations de conditions de limitation de suralimentation (57).

14. Véhicule à selle (10) pouvant effectuer des déplacements en mode suralimenté, comprenant le système d'affichage (60) pour le véhicule selon l'une des revendications 1 à 13.

15. Procédé d'affichage pour un véhicule (10) pouvant effectuer des déplacements en mode suralimenté, comprenant :
afficher une image d'informations de suralimentation (56) comprenant une image d'informations de conditions de limitation de suralimentation (57) indiquant des informations de conditions de limitation de suralimentation, et
modifier une zone d'affichage de l'image d'informations de conditions de limitation de suralimentation (57) en fonction d'une condition de limitation dans le déplacement en mode suralimenté, l'image d'informations de conditions de limitation de suralimentation (57) comprenant une pluralité de régions segmentées, la pluralité de régions segmentées comprenant une région d'affichage à segments initiale affichée en premier lieu lorsque la suralimentation peut être effectuée, **caractérisé en ce que** la région d'affichage segmentée initiale a une plus grande zone d'affichage dans la pluralité de régions segmentées.
